(19) Europäisches Patentamt
European Patent Office
Office européen des brevets

(11) **EP 0 618 048 B1**

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(51) Int. Cl.$^6$: **B26B 1/08**, B26B 5/00

(21) Anmeldenummer: **94102870.6**

(22) Anmeldetag: **25.02.1994**

(54) **Messer mit verschiebbarer Klinge**

Knife with sliding blade

Couteau à lame coulissante

(84) Benannte Vertragsstaaten:
**BE DE ES FR GB NL PT**

(30) Priorität: **27.03.1993 DE 4310037**

(43) Veröffentlichungstag der Anmeldung:
**05.10.1994 Patentblatt 1994/40**

(73) Patentinhaber: **MARTOR-ARGENTAX E.H. Beermann KG**
**D-42653 Solingen (DE)**

(72) Erfinder: **Beermann, Ewald Helmut**
**D-42653 Solingen (DE)**

(74) Vertreter: **Patentanwälte Ostriga & Sonnet**
**Stresemannstrasse 6-8**
**42275 Wuppertal (DE)**

(56) Entgegenhaltungen:
**EP-A- 0 244 517        DE-A- 3 727 142**
**DE-C- 4 200 018**

## Beschreibung

Die Erfindung betrifft ein Messer mit einer in einem hohlen Griffkörper geführten Messerklinge mit Haltefortsatz, auf den einerseits rückwärts in dessen Einfahrrichtung in Griffkörper-Längsrichtung ein Energiespeicher einwirkt und der andererseits als Teil einer Sperrvorrichtung ausgebildet ist, die bei Einrastung die Messeklinge in ausgefahrener Arbeitslage hält und die bei Erreichen einer vorbestimmten Ansprechschwelle für die Beschleunigung des Messers entrastet und dabei die Messerklinge unter Wirkung des Energiespeichers in den hohlen Griffkörper einfahren läßt.

Bei einem Messer dieser Art gemäß der EP 0 244 517 B1 besteht der Energiespeicher aus einer zylindrischen Schraubenfeder, die mit ihrem einen Ende am Haltefortsatz und mit ihrem anderen Ende an einer Stelle der Innenwandung des Griffkörpers angelenkt ist. Die Sperrvorrichtung wird von einem Rastzahn am Haltefortsatz und einem entsprechend geformten Rücksprung in einem als träge Masse ausgestalteten schwenkbeweglichen Hebel im Griffkörper gebildet, der unter Wirkung einer zweiten Feder beim Herausziehen der Messerklinge aus dem Griffkörper den Rastzahn in seinen Rücksprung eingreifen läßt. Sobald das Messer mitsamt dem Griffkörper eine unerwünscht beschleunigte Bewegung durchführt und die Trägheitskräfte des einarmigen Hebels die Sperrkräfte der zweiten Feder der Sperrvorrichtung sowie die äußeren, einwirkenden Reibungskräfte übersteigen, wird diese entrastet, und die Messerklinge fahrt unter Wirkung der zylindrischen Schraubenfeder in den Griffkörper ein. Dabei hat es sich herausgestellt, daß bei bestimmten Anwendungsfällen die Ansprechempfindlichkeit der Sperrvorrichtung bei jeweils denselben äußeren Auslösekräften einer relativ großen Schwankungsbreite unterworfen ist, die nach Möglichkeit verkleinert werden sollte.

Um die Handhabbarkeit eines solchen gattungsgemäßen Messers zu verbessern, ist bei einer weiteren Ausführungsform eines Messers der eingangs genannten Art gemäß der DE-PS 42 00 018 auch die Sperrfeder der Sperrvorrichtung als langgestreckte Zugfeder ausgebildet. Die nur vom Scheitel des Rastzahnes beaufschlagte, ebene Sperrfläche erstreckt sich bei ausgefahrener arretierter Messerklingenhalterung mit ihrer Längsachse im wesentlichen tangential zu einem Kreis um das Zentrum des Drehlagers der Sperrvorrichtung. Die durch die geometrischen Abmessungen dieser langgestreckten weichen Zugfeder bedingte Rückstellkraft ändert sich bei einem in einer Serienproduktion hergestellten erfindungsgemäßen Messer praktisch nicht, woraus eine stets reproduzierbare Ansprechempfindlichkeit der Sperrvorrichtung resultiert. Außerdem zeichnet sich dieses Messer durch eine für die Schneidarbeit erforderliche hinreichend hohe Ansprechschwelle aus, welche ein lästiges Zurückschnellen der Messerklingenhalterung bereits bei den mit üblicher Schneidarbeit verbundenen Verzögerungen zuverlässig verhindert. Diese Ansprechschwelle kommt unter der Zugwirkung der Sperrfeder trotz des vorbeschriebenen tangentialen Verlaufes an der ebenen Sperrfläche, die nur eine labile Arretierung der Sperrvorrichtung zu gestatten scheint, durch die bewußte Einbeziehung der hemmenden Reibkräfte im Zusammenwirken von Sperrvorrichtung und Haltefortsatz zustande.

Bei diesen vorbekannten Messern wurde die Ansprechschwelle stets rein mechanisch bewirkt mit der Folge, daß die Summe aller Friktionskräfte der unter Wirkung von Massenträgheitskräften arbeitenden Sperrvorrichtungen, der Rastfedern, der Lager sowie deren Gleit- und Rollreibungen Berücksichtigung finden müssen. Im Gefahrensfall hängt somit die Einfahrgeschwindigkeit der Messerklinge in den Griffkörper nicht nur von der Größe des Energiespeichers, hier die Vorspannung der auf den Haltefortsatz einwirkenden Schraubenfeder, sondern auch von den Reibungs- und Trägheitskräften der rein mechanisch wirkend Sperrvorrichtung und ihrer Entriegelungselemente ab. Hier setzt die Erfindung ein.

Dieser liegt die Aufgabe zugrunde, ein Messer der eingangs genannten Gattung zu schaffen, dessen Sperrvorrichtung einerseits mit großer Geschwindigkeit entrastet werden kann und andererseits weitgehend unabhängig von den die Ansprechschwelle mitbestimmenden trägen Masse und den damit verknüpften Friktionskräften ist.

Diese Aufgabe wird in Verbindung mit dem eingangs genannten Gattungsbegriff erfindungsgemäß dadurch gelöst, daß innerhalb des Griffkörpers ein jede Änderung seiner Translations- und Winkelbeschleunigung messender mikroelektronisch betätigbarer Beschleunigungssensor, wie kapazitiver Beschleunigungssensor od.dgl., angeordnet ist, der unter Zwischenschaltung einer elektrischen Übertragungseinrichtung bei Überschreitung eines eingestellten Sollwertes der Beschleunigung die Sperrvorrichtung entrastet und die Messerklinge unter Wirkung des Energiespeichers in den hohlen Griffkörper einfahren läßt. Derartige kapazitive Beschleunigungssensoren sind grundsätzlich, z.B. aus der DE-OS 37 27 142, bekannt und eignen sich besonders gut zur Messung kleiner Beschleunigungen. Da nunmehr die Messung der Beschleunigung sowie die Entrastung der Sperrvorrichtung elektrisch, d.h. praktisch ohne Zeitverzögerung, erfolgt und andererseits die kapazitiven Beschleunigungssensoren nur sehr geringe Abmessungen, z.B. eine Höhe von 1000 µm, eine Breite von 350 µm, eine Dicke von 3 µm aufweisen, sind sie von den bis dato bekannten großen Trägheitskräften der vorbekannten, raumgreifenden Betätigungen der Sperrvorrichtungen weniger abhängig. Dabei besteht die elektrische Übertragungseinrichtung vorteilhaft aus einem elektronischen Rechner mit einer Soll-Ist-Wert-Vergleichseinrichtung. Auch diese kann mitsamt der zu ihrem Betrieb erforderlichen Batterie im Griffkörper des Messers untergebracht werden.

Vorteilhaft ist der kapazitive Beschleunigungssensor als ein Zwei-Achsen-Beschleunigungssensor mit integrierter Signalverarbeitung in Form eines Biegebalkens als Elektrode ausgebildet, der in seinem mittleren Bereich mit dem Substrat verbunden und in seinen übrigen Bereichen relativ zur ortsfesten Gegenelektrode frei auslenkbar ist. Mit jeder Auslenkung des frei schwingenden Sensorbalkens ändert sich nicht nur die Größe der zugeordneten Flächen des Kondensators von Elektrode und Gegenelektrode, sondern damit auch die Kapazität und damit die Spannung an den beiden Elektroden. Denn bei einem derartigen Kondensator besteht zwischen der Spannung U seiner Elektroden, der Elektrizitätsmenge Q, der wirksamen Elektrodenfläche A, dem Abstand d der Elektroden sowie der relativen Dielektrizitätskonstanten $\varepsilon_r$ und der Influenzkonstanten $\varepsilon_o$ die Beziehung:

$$U = \frac{Q}{A} \cdot \frac{d}{\varepsilon_r \cdot \varepsilon_o}$$

Da somit jede elektrische Spannungsänderung direkt proportional dem Grad der Beschleunigung ist, kann über diese elektrische Spannungsänderung zwischen den Elektroden auf entsprechende Beschleunigungsänderungen geschlossen werden, die durch einen entsprechenden Soll-Ist-Wertvergleich des Rechners ausgewertet werden und entsprechende Signale an die Entrastung der Sperrvorrichtung weitergeben.

Zur Vergrößerung der Flächen des kapazitiven Beschleunigungssensors sind am frei auslenkbaren Ende seines Biegebalkens mehrere Kammzinken vorgesehen, die symmetrisch oder asymmetrisch entsprechenden Kammzinken der ortsfest mit dem Substrat verbundenen Gegenelektrode zugeordnet sind.

Da die Bewegung des Messers nicht nur rein translatorisch, sondern auch auf einer Kurvenbahn erfolgen kann, sind mindestens zwei Beschleunigungssensoren entweder um 90° zueinander versetzt auf demselben Substrat oder in Form der Biegebalken parallel zueinander auf einem gemeinsamen Substrat angeordnet, wobei aufgrund der asymmetrischen Lage der Kammzinken der beiden Elektroden jeweils der eine Beschleunigungssensor auf Linearbeschleunigungen und der andere Sensor nur auf Winkelbeschleunigungen anspricht. Durch eine entsprechende Anordnung dieser Beschleunigungssensoren können somit sämtliche ungleichförmigen Bewegungen eines Messers unabhängig von ihrer Richtung sehr genau erfaßt und sodann über den elektronischen Rechner mit seiner Soll-Ist-Vergleichseinrichtung bei Überschreiten des eingestellten Sollwertes die Entrastung der Sperrvorrichtung vorgenommen werden.

Durch diese Beschleunigungssensoren ist es auch möglich, die Messerklinge dann in den Griffkörper einfahren zu lassen, wenn beispielsweise ein Abrutschen in einer senkrecht zur Schwenkebene des als träge Masse ausgebildeten einarmigen Hebels der bekannten Messer erfolgt, was mit diesen gar nicht möglich ist.

Denn die Massenträgheit wird erst bei einer beschleunigten Bewegung in der Schwenkebene der trägen Masse oder in einer dazu unter einem spitzen Winkel geneigten Ebene wirksam. In einer senkrecht zur Schwenkebene der trägen Masse erfolgenden beschleunigten Bewegung bleibt diese unwirksam. Durch eine entsprechende Anordnung der sehr kleinen Beschleunigungssensoren kann in jeder beliebigen Beschleunigungsrichtung des Messers ein solcher Sensor angeordnet werden und sodann die gewünschte Entrastung der Sperrvorrichtung auslösen.

Um eine Beeinflussung der Beschleunigungssensoren durch Spannungsdifferenzen der Spannungs/Stromquelle zu unterbinden, ist den Beschleunigungssensoren ein Spannungsstabilisator vorgeschaltet und ein mit dem Rechner elektronisch verbundener, elektrischer Spannungsmesser als Soll-Ist-Wert-Vergleichseinrichtung nachgeschaltet.

Nach einer besonders vorteilhaften Weiterbildung der Erfindung besteht die Entrastung der Sperrvorrichtung aus einem von einer Spannungs/Stromquelle über den Rechner betätigbaren Elektromagneten, über den ein in einen Rücksprung des Haltefortsatzes eingreifender Sperrstift als Sperrvorrichtung herausziehbar ist. Damit kann auch die Sperrvorrichtung mit hoher Geschwindigkeit aus ihrer Sperrposition gefahren werden.

In Weiterbildung der Erfindung besteht der Energiespeicher entweder aus einem Elektromagneten oder in an sich bekannter Weise aus einer sich in Längsrichtung des hohlen Griffkörpers erstreckenden zylindrischen Schraubenfeder, die mit einem Ende am Haltefortsatz und mit ihrem anderen Ende an der Innenwandung des Griffkörpers befestigt ist. Bei der ersten Variante wird der Elektromagnet vorteilhaft dem Elektromagneten zur Entrastung der Sperrvorrichtung nachgeschaltet. Das heißt, daß der zweite Elektromagnet als Energiespeicher zum Einziehen der Messerklinge im gleichen Augenblick oder im Bruchteil einer Milli-Sekunde nach Ausziehen des Sperrstiftes der Sperrvorrichtung wirksam wird. Da in diesem Fall der Haltefortsatz gemeinsam mit der Messerklinge als geringe Masse ausgebildet werden kann, ist ein blitzschnelles Einziehen der Messerklinge mit diesem zweiten Elektromagneten möglich. Dabei sind der Spannungsstabilisator, die kapazitiven Beschleunigungssensoren, die Spannungsmesser, der Rechner und die Entrastung der Sperrvorrichtung einschließlich einer hierzu erforderlichen Mikrobatterie vorteilhaft innerhalb des hohlen Griffkörpers angeordnet.

Dabei kann die Spannungs/Stromquelle entweder aus einer gleichfalls im oder am Griffkörper angeordneten Batterie oder aus einem in den Griffkörper hineingeführten Niederspannungskabel mit einer Spannung von 6 Volt bis 12 Volt bestehen, welches über einen Niederspannungs-Transformator mit einer üblichen Spannungsquelle von 220 Volt verbunden ist. Letzteres ist überall dort von Vorteil, wo man auf den Einsatz von Batterien zur Aufrechterhaltung einer stets konstanten Spannung verzichten will. Außerdem hätte diese zweite Alternative den Vorzug der Sicherstellung einer stets erforderlichen Spannung in den unterschiedlichen Bereichen, z.B. Beschleunigungssensor von 1 Volt bis 1,5 Volt, Rechner von 3 Volt bis 6 Volt und Elektromagnet von 3 Volt bis 9 Volt.

Ein Ausführungsbeispiel der Erfindung ist in den Zeichnungen dargestellt. Dabei zeigen:

Fig. 1 eine Ausführungsform des erfindungsgemäßen Messers mit dem schematischen Schaltplan der Batterie, der kapazitiven Beschleunigungssensoren und des Rechners,

Fig. 2 die perspektivische Teilansicht eines Beschleunigungssensors in vergrößerter Darstellung und

Fig. 3 zwei um 90° zueinander versetzte kapazitive Beschleunigungssensoren mit ausschwingenden Kammzinken an beiden Enden der Biegebalken.

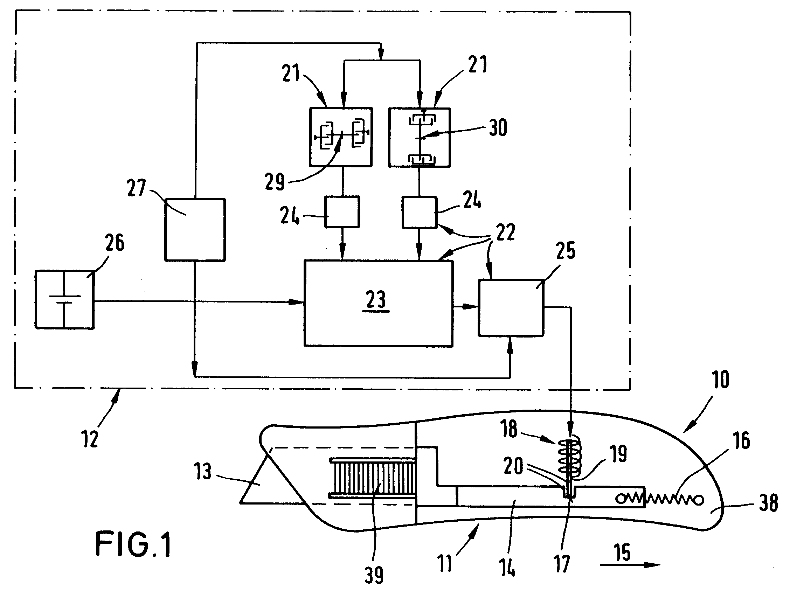

Gemäß Fig. 1 weist das neue Messer 10 zwei nicht näher bezeichnete Griffschalen auf, die in bekannter Weise formschlüssig aneinandergefügt und mittels einer Schraubverbindung lösbar aneinander gehalten sind. Diese Griffschalen bilden somit innerhalb des Griffkörpers 11 einen Hohlraum, der die gesamten, pauschal mit der Bezugsziffer 12 bezeichneten elektronischen Bauelemente aufnimmt.

Das Messer 10 ist mit einer in dem hohlen Griffkörper 11 geführten Messerklinge 13 mit Haltefortsatz 14 bestückt, auf dem einerseits rückwärts in dessen Einfahrrichtung gemäß dem Pfeil 15 in Griffkörper-Längsrichtung ein Energiespeicher 16 einwirkt, der im vorliegenden Fall aus einer zylindrischen Schraubenfeder besteht, aber auch durch einen Elektromagneten ersetzt sein kann. Der Haltefortsatz 14 ist mit einer Ausnehmung 17 versehen, in welche ein von einem Elektromagneten 18 betätigbarer Sperrstift 19 eingreift. Dieser Sperrstift 19 bildet in Verbindung mit der Ausnehmung 17 des Haltefortsatzes 14 die Sperrvorrichtung 20. Die Einrastung des Sperrstiftes 19 in die Ausnehmung 17 kann unter Schwerkraft und Wirkung der Feder 16 oder mechanisch mittels einer nicht dargestellten weichen Stellfeder oder elektrisch dadurch erfolgen, daß die Stromrichtung innerhalb des Elektromagneten 18 entsprechend ausgerichtet wird und zum Herausziehen des Sperrstiftes 19 umkehrbar ist.

Das Spannen der Schraubenfeder 16 kann mechanisch von Hand in der Weise geschehen, wie es in der EP 0 244 517 oder in der DE-PS 42 00 018 beschrieben ist.

Bei Einrastung des Sperrstiftes 19 in die Ausnehmung 17 hält die Sperrvorrichtung 20 die Messerklinge 13 in der dargestellten ausgefahrenen Arbeitslage, wohingegen bei Entrastung des Sperrstiftes 19 aus der Ausnehmung 17 die Messerklinge 13 unter Wirkung des Energiespeichers 16 in den hohlen Griffkörper 11 einfährt.

Erfindungsgemäß ist innerhalb des Griffkörpers 11 mindestens ein jede Änderung seiner Translations- und Winkelbeschleunigung messender mikroelektronisch betätigbarer, kapazitiver Beschleunigungssensor 21 angeordnet, der unter Zwischenschaltung einer elektrischen Übertragungseinrichtung 22 bei Überschreiten eines eingestellten Sollwertes der Beschleunigung die Sperrvorrichtung 20 entrastet und die Messerklinge 13 unter Wirkung des Energiespeichers 16 in den hohlen Griffkörper 11 einfahren läßt. Anstelle des kapazitiven Beschleunigungssensors kann grundsätzlich auch ein mikroelektronischer induktiver Beschleunigungssensor zum Einsatz gelangen.

Die elektrische Übertragungseinrichtung 22 besteht vorteilhaft aus einem elektronischen Rechner 23 mit einer integrierten soll-Ist-Wert-Vergleichseinrichtung 24 und einem elektrischen Schalter 25.

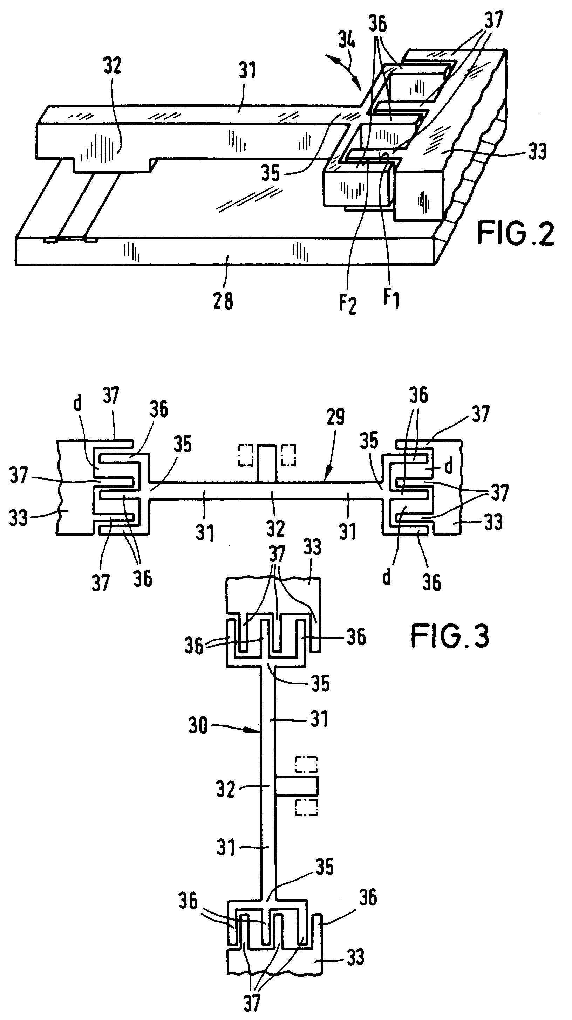

Zwischen der Spannungs/Stromquelle 26 (elektrische Batterie) und den kapazitiven Beschleunigungssensoren 21 ist ein Spannungsstabilisator 27 zwischengeschaltet, um an den an Hand der Figuren 2 und 3 noch näher zu beschreibenden Elektroden der Beschleunigungssensoren 21 eine stets konstante elektrische Grundspannung sicherzustellen.

Gemäß Fig. 3 besteht der kapazitive Beschleunigungssensor 21 aus zwei um 90° zueinander versetzten auf demselben Substrat 28 angeordneten, Zwei-Achsen-Beschleunigungssensoren 29, 30 mit integrierter Signalverarbeitung in Form eines Biegebalkens 31 als Elektrode, der in seinem mittleren Bereich 32 mit dem Substrat 28 verbunden und in seinen übrigen Bereichen relativ zur ortsfesten Gegenelektrode 33 in Richtung des Doppelpfeiles 34 von Fig. 2 frei auslenkbar ist. Dadurch können die Biegebalken 31 an ihren freien, mit mehreren Kammzinken 36 versehenen Enden 35 relativ zu den ortsfest mit dem Substrat 28 verbundenen Gegenelektroden 33 frei ausschwingen. In Abhängigkeit von diesem Ausschwingen ändert sich die Größe der wirksamen Elektrodenflächen $F_1$ der Kammzinken 36 zu den entsprechenden Flächen $F_2$ der Kammzinken 37 der ortsfesten Gegenelektrode 33. Soweit der Abstand d zwischen den Kammzinken 36 der Elektroden 29, 30 zu den Kammzinken 37 der Gegenelektrode 33 konstant bleibt, ist die Spannung U zwischen den Elektroden 29, 30 einerseits und den Gegenelektroden 33 andererseits direkt proportional dem Verhältnis der Elektrizitätsmenge Q zu der wirksamen Elektrodenfläche A, die sich mit letzterer bei einer Ausschwingung der Biegebalken 31 ändert. Die dadurch bedingte Änderung der Spannung U ist damit auch ein Maß der Beschleunigung, dem die Beschleunigungssensoren 29, 30 unterliegen. Durch einen entsprechenden Soll-Ist-Wert-Vergleich der Vergleichseinrichtung 24 ermittelt der Rechner 23 rasch ein Überschreiten der Sollbeschleunigung und betätigt sodann über den Schalter 25 den Elektromagneten 18, der sodann den Raststift 19 aus dem Rücksprung 17 der Sperrvorrichtung 20 herauszieht, wodurch die Messerklinge 13 unter Wirkung des Energiespeichers 16 in Richtung des Pfeiles 15 in den hohlen Griffkörper 11 des Messers 10 einfährt.

Wie vorerwähnt, kann der Energiespeicher 16 auch durch einen Elektromagneten ersetzt werden. In diesem Fall ist es empfehlenswert, die als Batterie ausgebildete Spannungs/Stromquelle 26 durch ein in den Griffkörper 11, beispielsweise am hinteren Ende 38, eingeführtes Niederspannungskabel mit einer Spannung von 6 Volt bis 12 Volt zu ersetzen, welches über einen nicht dargestellten Niederspannungs-Transformator mit einer üblichen Spannungsquelle von 220 Volt verbunden ist. Unterstellt man einmal einen Betrieb der kapazitiven Beschleunigungssensoren 21 mit einer Spannung von 1 Volt bis 1,5 Volt, einen Betrieb des Rechners 23 mit einer Spannung von 3 Volt bis 6 Volt und einen Betrieb der Elektromagneten 18 zur Entrastung der Sperrvorrichtung 20 und des weiteren, nicht dargestellten Elektromagneten als Energiespeicher zum Ersatz der Feder 16 eine Betriebsspannung von 6 Volt bis 12 Volt, so können diese unterschiedlichen Spannungen für die unterschiedlichen Zwecke am geeignetsten über einen entsprechenden Niederspannungs-Transformator außerhalb des hohlen Griffkörpers 11 mittels eines in ihn hineingeführten Niederspannungskabels erbracht werden. Bei Beibehaltung einer zylindrischen Schraubenfeder 16 als Energiespeicher kann zum Betrieb des Messers 10 eine im Hohlkörper 11 untergebrachte Batterie 26 mit einer Spannung von 6 Volt bis 9 Volt den Anforderungen zum Betrieb des Rechners 23 und als Elektromagnet 18 genügen.

Dabei versteht es sich, daß die Batterie aus ergonomischen Gründen möglichst im Schwerpunkt oder in der Nähe des Schwerpunktes des Messers 10 angeordnet wird.

**Patentansprüche**

1. Messer (10) mit einer in einem hohlen Griffkörper (11) geführten Messerklinge (13) mit Haltefortsatz (14), auf den einerseits rückwärts in dessen Einfahrrichtung (Pfeil 15) in Griffkörper-Längsrichtung ein Energiespeicher (16) einwirkt und der andererseits als Teil einer Sperrvorrichtung (20) ausgebildet ist, die bei Einrastung die Messerklinge in ausgefahrener Arbeitslage hält und die bei Erreichen einer vorbestimmten Ansprechschwelle für die Beschleunigung des Messers (10) entrastet und dabei die Messerklinge unter Wirkung des Energiespeichers (16) in den hohlen Griffkörper (11) einfahren läßt, dadurch gekennzeichnet, daß innerhalb des Griffkörpers (11) mindestens ein jede Änderung seiner Translations- und Winkelbeschleunigung messender mikroelektronisch betätigbarer Beschleunigungssensor, wie kapazitiver Beschleunigungssensor (21) od.dgl., angeordnet ist, der unter Zwischenschaltung einer elektrischen Übertragungseinrichtung (22) bei Überschreitung eines eingestellten Sollwertes der Beschleunigung die Sperrvorrichtung (20) entrastet und die Messerklinge (13) unter Wirkung des Energiespeichers (16) in den hohlen Griffkörper (11) einfahren läßt.

2. Messer nach Anspruch 1, dadurch gekennzeichnet, daß die elektrische Übertragungseinrichtung (22) einen elektronischen Rechner (23) mit einer Soll-Ist-Wert-Vergleichseinrichtung (24) umfaßt.

3. Messer nach Anspruch 1 oder 2, dadurch gekennzeichnet, daß der kapazitive Beschleunigungssensor (21) aus einem Zwei-Achsen-Beschleunigungssensor (29, 30) mit integrierter Signalverarbeitung in Form eines Biegebalkens (31) als Elektrode besteht, der in seinem mittleren Bereich (32) mit einem Substrat (28) verbunden und in seinen übrigen Bereichen relativ zur ortsfesten Gegenelektrode (33) frei auslenkbar ist.

4. Messer nach Anspruch 3, dadurch gekennzeichnet, daß der Beschleunigungssensor (29, 30) am frei auslenkbaren Ende (35) seines Biegebalkens (31) mit mehreren Kammzinken (36) versehen ist, die symmetrisch oder asymmetrisch entsprechenden Kammzinken (37) der ortsfest mit dem Substrat (28) verbundenen Gegenelektrode (33) zugeordnet sind.

5. Messer nach Anspruch 3 oder nach Anspruch 4, dadurch gekennzeichnet, daß zwei Beschleunigungssensoren (29, 30) um 90° zueinander versetzt auf demselben Substrat (28) angeordnet sind.

6. Messer nach Anspruch 3 oder nach Anspruch 4, dadurch gekennzeichnet, daß zwei Beschleunigungssensoren (29, 30) in Form der Biegebalken (31) parallel zueinander auf einem gemeinsamen Substrat (28) angeordnet sind, wobei aufgrund der asymmetrischen Lage der Kammzinken (36, 37) der beiden Elektroden (31, 33) jeweils der eine Beschleunigungssensor (29) auf Linearbeschleunigungen und der andere Sensor (30) nur auf Winkelbeschleunigungen anspricht.

7. Messer nach einem der Ansprüche 3 bis 6, dadurch gekennzeichnet, daß den Beschleunigungssensoren (29, 30) ein Spannungsstabilisator (27) vorgeschaltet und ein mit dem Rechner (23) elektronisch verbundener, elektrischer Spannungsmesser (24) als Soll-Ist-Wert-Vergleichseinrichtung nachgeschaltet ist.

8. Messer nach einem der Ansprüche 2 bis 7, dadurch gekennzeichnet, daß die Entrastung der Sperrvorrichtung (20) aus einem von einer Spannungs/Stromquelle (26) über den Rechner (23) betätigbaren Elektromagneten (18) besteht, über den ein in einen Rücksprung (17) des Haltefortsatzes (14) eingreifender Sperrstift (19) als Sperrvorrichtung (20) herausziehbar ist.

9. Messer nach einem der Ansprüche 1 bis 8, dadurch gekennzeichnet, daß der Energiespeicher entweder aus einem Elektromagneten oder in an sich bekannter Weise aus einer sich in Längsrichtung (Pfeil 15) des hohlen Griffkörpers (11) erstreckenden zylindrischen Schraubenfeder (16) besteht, die mit einem Ende am Haltefortsatz (14) und mit ihrem anderen Ende an der Innenwandung des Griffkörpers (11) befestigt ist.

10. Messer nach einem der Ansprüche 7 bis 9, dadurch gekennzeichnet, daß der Spannungsstabilisator (27), die kapazitiven Beschleunigungssensoren (29, 30), die Spannungsmesser (24), der Rechner (23) und die Entrastung (18) der Sperrvorrichtung (20) innerhalb des hohlen Griffkörpers (11) angeordnet sind.

11. Messer nach einem der Ansprüche 8 bis 10, dadurchgekennzeichnet, daß die Spannungs/Stromquelle (26) entwederaus einer gleichfalls im oder am Griffkörper (11) angeordneten Batterie oder aus einem in den Griffkörper (11) hineingeführten Niederspannungskabel mit einer Spannung von 6 Volt bis 12 Volt besteht, welches über einen Niederspannungs-Transformator mit einer üblichen Spannungsquelle von 220 Volt verbunden ist.

**Claims**

1. Knife (10) having a blade (13), which is guided in a hollow handle (11) and has a holding extension (14), upon which on the one hand an energy storage mechanism (16) acts rearwards in the insertion direction (arrow 15) of the holding extension in a longitudinal direction of the handle and which on the other hand forms part of a locking device (20) which, upon latching, holds the blade in the extended working position and which, upon attainment of a predetermined response threshold for the acceleration of the knife (10), unlatches and in so doing allows the blade to move under the action of the energy storage mechanism (16) into the hollow handle (11), characterized in that disposed inside the handle (11) is at least one micro-electronically operable acceleration sensor, such as a capacitive acceleration sensor (21) or the like, which measures each change in the translational and angular acceleration of the handle and through the agency of an electrical transmission device (22), when an adjusted setpoint value of acceleration is exceeded, unlatches the locking device (20) and allows the blade (13) to move under the action of the energy storage mechanism (16) into the hollow handle (11).

2. Knife according to claim 1, characterized in that the electrical transmission device (22) comprises an electronic computer (23) having a setpoint/actual-value comparison device (24).

3. Knife according to claim 1 or 2, characterized in that the capacitive acceleration sensor (21) comprises a two-axis acceleration sensor (29, 30) with integrated signal processing in the form of a bending beam (31) as an electrode, which in its middle region (32) is connected to the substrate (28) and in its remaining regions is freely deflectable relative to the stationary counter-electrode (33).

4. Knife according to claim 3, characterized in that the acceleration sensor (29, 30) at the freely deflectable end (35) of its bending beam (31) is provided with a plurality of comb teeth (36), which are symmetrically or asymmetrically associated with corresponding comb teeth (37) of the counter-electrode (33) which is connected in a stationary manner to the substrate (28).

5. Knife according to claim 3 or claim 4, characterized in that two acceleration sensors (29, 30) are disposed offset by 90° relative to one another on the same substrate (28).

6. Knife according to claim 3 or claim 4, characterized in that two acceleration sensors (29, 30) in the form of the bending beams (31) are disposed parallel to one another on the same substrate (28), with, on account of the asymmetrical position of the comb teeth (36, 37) of the two electrodes (31, 33), in each case the one acceleration sensor (29) responding to linear accelerations and the other sensor (30) responding only to angular accelerations.

7. Knife according to one of claims 3 to 6, characterized in that a voltage stabilizer (27) is connected upstream of the acceleration sensors (29, 30) and a voltmeter (24) electronically connected to the computer (23) is connected as a setpoint/actual-value comparison device downstream of the acceleration sensors (29, 30).

8. Knife according to one of claims 2 to 7, characterized in that the unlatching device of the locking device (20) comprises an electromagnet (18), which is operable by a voltage/current source (26) via the computer (23) and by means of which a locking pin (19), which engages as a locking device (20) into a recess (17) of the holding extension (14), is withdrawable.

9. Knife according to one of claims 1 to 8, characterized in that the energy storage mechanism comprises either an electromagnet or in a known manner a cylindrical helical spring (16), which extends in a longitudinal direction (arrow 15) of the hollow handle (11) and is fastened by one end to the holding extension (14) and by its other end to the inner wall of the handle (11).

10. Knife according to one of claims 7 to 9, <u>characterized in that</u> the voltage stabilizer (27), the capacitive acceleration sensors (29, 30), the voltmeters (24), the computer (23) and the unlatching device (18) of the locking device (20) are disposed inside the hollow handle (11).

11. Knife according to one of claims 8 to 10, <u>characterized in that</u> the voltage/current source (26) comprises either a battery, which is likewise disposed in or on the handle (11), or a low-voltage cable with a voltage of 6 to 12 V, which is introduced into the handle (11) and is connected by a low-voltage transformer to a conventional voltage source of 220 V.

**Revendications**

1. Couteau (10) comprenant une lame de couteau (13) qui est guidée dans un corps de préhension creux (11) et qui comporte un prolongement de retenue (14) sur lequel un accumulateur d'énergie (16) agit à l'arrière dans sa direction de rétraction (flèche 15) dans la direction longitudinale du corps de préhension, d'une part, cependant qu'il est réalisé d'autre part sous la forme d'un dispositif de blocage (20), celui-ci maintenant lors de l'encliquetage la lame de couteau dans la position de travail dans laquelle elle est sortie et se décliquetant en vue de l'accélération du couteau (10) lorsqu'un seuil de réponse prédéterminé est atteint, en laissant entrer la lame de couteau dans le corps de préhension creux (11) sous l'effet de l'accumulateur d'énergie (16), caractérisé par le fait qu'est disposé à l'intérieur du corps de préhension (11) au moins un capteur d'accélération, comme un capteur d'accélération capacitif (21) ou similaire, à actionnement par voie microélectronique qui mesure toute modification de son accélération angulaire et en translation, qui décliquette le dispositif de blocage (20) lorsqu'une valeur de consigne préréglée de l'accélération est dépassée vers le haut, moyennant l'interposition d'un dispositif électrique de transmission (22), et qui fait entrer la lame de couteau (13) dans le corps de préhension creux (11) sous l'effet de l'accumulateur d'énergie (16).

2. Couteau selon la revendication 1, caractérisé par le fait que le dispositif électrique de transmission (22) comprend un calculateur électronique (23) pourvu d'un dispositif (24) de comparaison entre la valeur de consigne et la valeur réelle.

3. Couteau selon la revendication 1 ou 2, caractérisé par le fait que le capteur d'accélération capacitif (21) est constitué par un capteur d'accélération à deux axes (29, 30) et à traitement du signal intégré, et ce, sous la forme d'une poutre de flexion (31) servant d'électrode qui est liée dans sa zone centrale (32) à un substrat (28) et qui peut dévier librement dans ses autres zones par rapport à la contre-électrode fixe (33).

4. Couteau selon la revendication 3, caractérisé par le fait que le capteur d'accélération (29, 30) est pourvu, à l'extrémité à déviations libres (35) de sa poutre de flexion (31), de plusieurs dents de peigne (36) qui sont associées de manière symétrique ou asymétrique à des dents de peigne correspondantes (37) de la contre-électrode (33), laquelle est solidaire du substrat (28).

5. Couteau selon la revendication 3 ou selon la revendication 4, caractérisé par le fait que deux capteurs d'accélération (29, 30) sont disposés sur le même substrat (28) en étant décalés de 90° l'un par rapport à l'autre.

6. Couteau selon la revendication 3 ou selon la revendication 4, caractérisé par le fait que deux capteurs d'accélération (29, 30) sont disposés parallèlement entre eux sur un substrat commun (28) sous la forme des poutres de flexion (31), cependant qu'à chaque fois, du fait de la position asymétrique des dents de peigne (36, 37) des deux électrodes (31, 33), l'un (29) des capteurs d'accélération répond aux accélérations linéaires et l'autre capteur (30) ne répond qu'aux accélérations angulaires.

7. Couteau selon l'une des revendications 3 à 6, caractérisé par le fait qu'un stabilisateur de tension (27) est monté en amont des capteurs d'accélération (29, 30), et qu'un voltmètre électrique (24) qui est relié électroniquement au calculateur (23) est monté en aval pour servir de dispositif de comparaison entre la valeur de consigne et la valeur réelle.

8. Couteau selon l'une des revendications 2 à 7, caractérisé par le fait que l'encliquetage du dispositif de blocage (20) est constitué par un électroaimant (18) qui peut être actionné à partir d'une source de tension et de courant (26) par l'intermédiaire du calculateur (23) et au moyen duquel on peut retirer une tige de blocage (19), celle-ci pénétrant dans un évidement (17) du prolongement de retenue (14) pour servir de dispositif de blocage (20).

9. Couteau selon l'une des revendications 1 à 8, caractérisé par le fait que l'accumulateur d'énergie est constitué par un électroaimant ou, d'une manière connue en elle-même, par un ressort hélicoïdal cylindrique (16) qui s'étend dans la direction longitudinale (flèche 15) du corps de préhension creux (11) en étant fixé par une extrémité au prolongement de retenue (14) et, par son autre extrémité, à la paroi intérieure du corps de préhension (11).

10. Couteau selon l'une des revendications 7 à 9, caractérisé par le fait que le stabilisateur de tension (27), les capteurs d'accélération capacitifs (29, 30), les voltmètres (24), le calculateur (23) et le décliquetage (18) du dispositif de blocage (20) sont disposés à l'intérieur du corps de préhension creux (11).

11. Couteau selon l'une des revendications 8 à 10, caractérisé par le fait que la source de tension et de courant (26) est constituée, soit par une pile qui est également disposée dans le corps de préhension (11) ou sur celui-ci, soit par un conducteur à basse tension dont la tension est de 6 volts à 12 volts, qui est amené dans le corps de préhension (11) et qui est relié à une source de tension habituelle à 220 volts par l'intermédiaire d'un transformateur à basse tension.

FIG.1

EP 0 618 048 B1

FIG.2

FIG.3